# FASCICULE DE BREVET EUROPEEN

(11) **EP 1 642 041 B1**
(45) Date de publication et mention de la délivrance du brevet: **17.10.2012**
(21) Numéro de dépôt: 04767866.9
(22) Date de dépôt: 02.07.2004
(51) Int. Cl.: F16F 15/131

(54) **PERFECTIONNEMENT AUX VOLANTS D INERTIE, EN PARTICULIER POUR VEHICULE AUTOMOBILE**
VERBESSERTES TRÄGHEITSSCHWUNGRAD, BESONDERS FÜR EIN KRAFTFAHRZEUG
IMPROVED INERTIA FLYWHEEL IN PARTICULAR FOR A MOTOR VEHICLE

(30) Priorité: 04.07.2003 FR 0308191
(43) Date de publication de la demande: 05.04.2006
(73) Titulaire: Valeo Embrayages, 80009 Amiens Cedex 1 (FR)
(72) Inventeur: DOREMUS, Eric, F-80310 Belloy sur Somme (FR)
(74) Mandataire: Jeuland, Mickaël
(86) Numéro de dépôt international: PCT/FR2004/050304
(87) Numéro de publication internationale: WO 2005/005858

(56) Documents cités:
- WO-A-98/51940
- DE-A- 10 224 874
- FR-A- 2 621 371
- GB-A- 598 646
- GB-A- 2 343 233
- GB-A- 2 358 233
- US-A- 5 819 598

## Description

L'invention concerne un volant d'inertie atténuateur de vibrations de torsion ou d'irrégularités de rotation, en particulier pour véhicule automobile de tourisme ou utilitaire.
L'invention est particulièrement destinée à réduire les irrégularités de rotation des vilebrequins des moteurs à combustion interne, principalement lorsque la vitesse de rotation du vilebrequin se situe entre la vitesse de ralenti et une valeur supérieure à la vitesse de ralenti, par exemple entre la vitesse de ralenti et une vitesse de rotation aux alentours de 2500 tours par minute.
Dans l'état de la technique antérieure, un amortisseur de vibrations de torsion est constitué d'un premier volant d'inertie lié en rotation à un arbre menant, comme par exemple l'extrémité d'un vilebrequin, d'un second volant d'inertie pouvant être lié en rotation à un arbre mené par l'intermédiaire d'un mécanisme d'embrayage, comme par exemple l'arbre d'entrée d'une boite de vitesses. Ces deux volants d'inertie sont montés coaxiaux et sont reliés l'un à l'autre par un mécanisme à ressorts permettant de filtrer les vibrations de torsion provenant de l'arbre menant ou de l'arbre mené. Un dispositif d'amortissement par friction complète en général le dispositif et a pour but de limiter les oscillations relatives entre les deux volants d'inertie, principalement lors des phases de démarrage ou d'arrêt de l'arbre menant. Ainsi, les amplitudes de vibrations de torsion générées par l'arbre menant, comme par exemple le vilebrequin d'un moteur à combustion interne, sont atténuées au niveau de l'entrée de l'arbre mené. Les ressorts du mécanisme d'amortissement des vibrations d'un tel dispositif sont disposés soit circonférentiellement, soit radialement. Lors des phases de démarrage ou d'arrêt de l'arbre menant, ces ressorts qui en règle générale travaillent en compression, sont fortement sollicités lors du passage du régime de résonance situé en dessous du régime de ralenti, malgré le dispositif d'amortissement par friction. Ce phénomène de passage de la résonance lors du démarrage ou de l'arrêt de l'arbre menant peut générer du bruit ainsi que de trop fortes amplitudes d'oscillations des organes entraînés par l'arbre menant comme par exemple les organes entraînés par la courroie d'entraînement des accessoires. D'autre part, ces dispositifs à double-volant amortisseur amplifient les vibrations de torsion et irrégularités de l'arbre menant car l'inertie polaire du premier volant lié en rotation avec l'arbre menant est plus faible que celle d'un volant traditionnel simple masse. Cet inconvénient entraîne des niveaux de vibrations dangereux au niveau des organes entraînés par l'arbre menant comme par exemple les accessoires et leur dispositif d'entraînement par courroie d'un moteur à combustion interne ou encore le ou les arbres à cames et leur mécanisme d'entraînement par courroie ou par chaîne. Le niveau élevé des vibrations de torsion de l'arbre menant, principalement à des vitesses proches du ralenti, génère également de fortes imprécisions de mesure de position angulaire dudit arbre menant, ces mesures étant en général réalisées par des capteurs du type inductif.
On connaît des dispositifs constitués de deux volants d'inertie coaxiaux dont l'un est lié à rotation avec le second par l'intermédiaire d'un embrayage centrifuge, comme dans le document FR2811392. Lorsque la vitesse de rotation de l'arbre menant est inférieure à une certaine valeur, le second volant est embrayé sur le premier volant, augmentant ainsi l'inertie fixée en bout de l'arbre menant et réduisant ainsi les irrégularités de rotation. Néanmoins, ce système, pour permettre une atténuation significative des vibrations de torsion ou irrégularités de rotation, implique des valeurs élevées d'inertie et de poids du dispositif.

On connaît également des volants simple ou doubles munis d'un dispositif de masses pendulaires ayant pour but d'absorber une partie des vibrations de torsion. Ces masses, encore appelées oscillateurs pendulaires, s'étendent autour de l'axe de rotation du volant et sont libres d'osciller autour d'un axe fictif sensiblement parallèle à l'axe de rotation du volant. Ce dispositif peut prendre la forme de masses cylindriques pouvant osciller en roulant à l'intérieur de logements cylindriques. Il peut également prendre la forme d'un système pendulaire dit bifilaire, comme proposé par exemple dans le document US6280330. Dans cet exemple, le dispositif de masses pendulaires est lié à rotation avec le second volant d'inertie comprenant le plateau de réaction de l'embrayage. Lorsque les masses pendulaires réagissent aux irrégularités de rotation, elles oscillent de manière à ce que le centre de gravité de chacune de ces masses pendulaires oscille autour d'un axe sensiblement parallèle à l'axe de rotation de l'arbre menant. La position radiale du centre de gravité de chacune des masses pendulaires par rapport à l'axe de rotation de l'arbre menant ainsi que la distance de ce centre de gravité par rapport à l'axe fictif d'oscillations sont établies de manière à ce que sous l'effet des forces centrifuges, la fréquence d'oscillation de chacune des masses pendulaires soit proportionnelle à la vitesse de rotation de l'arbre menant, ce multiple pouvant par exemple prendre une valeur proche du rang de l'harmonique prépondérant des vibrations responsables des fortes irrégularités de rotation au voisinage du ralenti.
Ces dispositifs à masses pendulaires sont néanmoins coûteux, lourds, fragiles et bruyants. Ils sont également limités dans leur capacité à absorber l'énergie vibratoire, compte tenu des limites des angles d'oscillations des masses pendulaires par rapport à l'axe de rotation du volant. Enfin, les masses pendulaires, soumises aux forces centrifuges, exercent des contraintes mécaniques augmentant proportionnellement au carré de la vitesse de rotation de l'arbre menant et pouvant être dangereuses aux organes de liaisons pendulaires, risquant d'entraîner rapidement, sous l'effet des forces centrifuges, la destruction du dispositif.
On a également proposé, par exemple dans le document GB598646, un dispositif constitué de deux volants d'inertie coaxiaux, le premier volant étant fixé en bout d'un arbre menant, le second étant lié à rotation par l'intermédiaire d'un mécanisme de liaison. Ce mécanisme de liaison comprend notamment des bras articulés autour d'un pivot. Sous l'effet des forces centrifuges, les bras peuvent transmettre un couple de rappel au second volant d'inertie libre en rotation relative par rapport au premier. Ce système se comporte comme un amortisseur de vibrations de torsion dont la fréquence d'oscillations est sensiblement proportionnelle à la vitesse de rotation de l'arbre menant. Néanmoins, ce dispositif tel que décrit dans l'exemple présente les mêmes inconvénients que les systèmes dits à masses pendulaires bifilaires. Au delà d'un certain régime de rotation de l'arbre menant, les bras, soumis aux forces centrifuges, exercent des contraintes pouvant être dangereuses aux organes de liaisons, risquant d'entraîner rapidement la destruction du dispositif.

Le document FR-A-2 621 371 décrit un amortisseur de torsion comprenant un levier articulé par une extrémité sur une masse d'inertie et s'appuyant à son autre extrémité sur un ressort porté par l'autre masse d'inertie, le levier portant une garniture de friction qui peut s'appliquer sur une surface cylindrique interne de cette autre masse d'inertie.

Par ailleurs, le document FR-A-2 621 371 décrit un amortisseur de vibrations de torsion, comprenant un bras monté à rotation sur une masse d'inertie autour d'un premier axe à l'une de ses extrémités et coopérant à son autre extrémité avec un ressort porté par l'autre masse d'inertie, le levier portant une garniture de friction qui s'applique contre une paroi interne cylindrique de l'autre volant d'inertie.

Le document US 5 819 598 décrit deux masses d'inertie reliées par des couples de leviers articulés dont le point commun comporte un élément élastique résistant à la rotation relative des masses après un angle de rotation déterminé.

Le document GB-A-2343233 décrit un amortisseur de torsion comprenant des ressorts de compression circonférentiels et un mécanisme de liaison dans lequel des bielles 25 sont reliées par des leviers flexibles 28 à des plaques 40 de support des ressorts 15 d'un amortisseur de torsion.

Un but de l'invention est de fournir un dispositif permettant de résoudre les problèmes précités.
L'invention peut notamment être avantageusement dimensionnée de manière à atténuer de façon significative les irrégularités de rotation de l'arbre menant, comme par exemple le vilebrequin d'un moteur à combustion interne, limitant ainsi également les irrégularités de rotation des organes entraînés par l'arbre menant, comme l'arbre d'entrée d'une boite de vitesse, ou encore les organes entraînés par des courroies ou des chaînes, comme par exemple les accessoires ou les arbres à cames.
Elle a pour objet un volant d'inertie atténuateur des vibrations de torsion ou irrégularités de rotation, en particulier pour véhicule automobile de tourisme ou utilitaire, qui est du type à mécanisme de liaisons articulées reliant deux masses d'inertie coaxiales avec une structure simple, peu encombrante et peu coûteuse.
Elle a également pour objet un volant d'inertie atténuateur des vibrations de torsion ou irrégularités de rotation dont le mécanisme de liaisons articulées permet d'exercer un couple de rappel sur la seconde masse d'inertie lorsque celle-ci dévie en rotation de sa position dite d'équilibre par rapport à la première masse d'inertie.

Elle a également pour objet un volant d'inertie atténuateur des vibrations de torsion ou irrégularités de rotation dont le mécanisme de liaisons articulées comprend des bras en forme de levier élastiquement déformables sous l'effet des forces centrifuges.
Elle a également pour objet un volant d'inertie atténuateur des vibrations de torsion ou irrégularités de rotation dont l'une des masses d'inertie sert d'appui du mécanisme de liaisons articulées au delà d'une certaine vitesse de rotation de l'arbre menant.Elle propose à cet effet un volant d'inertie atténuateur de vibrations, de torsion ou d'irrégularités de rotation, notamment pour véhicule automobile, comprenant au moins deux masses d'inertie coaxiales, l'une entraînée en rotation par un arbre menant et l'autre montée à rotation sur la première, un mécanisme de liaisons articulées reliant les deux masses d'inertie et comportant au moins une masse complémentaire apte à se déplacer sous l'action d'une force centrifuge lors de la rotation du volant d'inertie, caractérisé en ce que le mécanisme comprend :
- un bras en forme de levier s'étendant sensiblement dans un plan perpendiculaire à l'axe de rotation du volant d'inertie, ce bras étant monté à rotation sur l'une des deux masses d'inertie autour d'un premier axe et portant la masse complémentaire,
- une bielle montée à rotation sur l'autre des deux masses d'inertie autour d'un deuxième axe, d'une part, et, d'autre part, sur le bras en forme de levier autour d'un troisième axe situé entre le premier axe et la masse complémentaire, le bras comportant une zone située entre les moyens formant masse complémentaire et le troisième axe et apte à se déformer élastiquement sous l'effet de la force centrifuge,- et en ce que le volant d'inertie comporte des moyens de limitation du déplacement de la masse complémentaire lorsque la force centrifuge atteint une valeur seuil prédéterminée correspondant à une vitesse de rotation prédéterminée, ces moyens de limitation comprenant une jante (22,39) sensiblement cylindrique localisée sur une périphérie extérieure de l'une des masses d'inertie.

Avantageusement, chaque module du mécanisme de liaisons articulées est complété par une série de paliers et de flasques utilisés soit comme des éléments d'interface de contact et de résistance à l'usure entre les axes de pivotement, les bras, les articulation en forme de bielle, les rouleaux cylindriques, soit comme butées de positionnement.
De préférence, le dispositif selon l'invention comprend quatre modules de liaisons articulées répartis deux à deux symétriquement autour de l'axe de rotation de l'arbre menant.
Chacune des masses supplémentaires peut être revêtue d'une épaisseur de caoutchouc ou matériau élastomère localisée sur l'un des bords extérieurs de ladite masse, de préférence sur le bord situé en vis à vis avec la jante intérieure de la seconde masse d'inertie.
Lorsque chaque bras en forme de levier n'est pas complété par une ou plusieurs masses complémentaires, il est revêtu d'une épaisseur de caoutchouc ou matériau élastomère localisée sur l'un des bords extérieurs dudit bras en forme de levier, de préférence sur le bord situé en vis à vis avec la jante intérieure de la seconde masse d'inertie.

Ainsi, dans le dispositif selon l'invention, les modules constituant le mécanisme de liaisons articulées sont dimensionnés de manière à transmettre, sous l'effet des forces centrifuges, un couple résultant de rappel sur la seconde masse d'inertie montée à rotation sur la première masse d'inertie fixée sur l'arbre menant.
Le couple résultant de rappel provient de la décomposition des forces centrifuges générées principalement par les bras munis le cas échéant de masses complémentaires. Ces forces centrifuges sont transmises par le mécanisme de liaisons articulées aux axes de pivotement des articulations en forme de bielle, lesquels sont fixés sur la seconde masse d'inertie. Ce couple résultant de rappel est quasiment nul lorsque la seconde masse d'inertie n'a pas dévié de sa position.dite d'équilibre par rapport à la première masse d'inertie. Dans le cas contraire, ce couple résultant de rappel est, selon le mode de réalisation et les dimensions du mécanisme de liaisons articulées, sensiblement proportionnel à l'amplitude de déviation angulaire relative de la seconde masse d'inertie et sensiblement proportionnel au carré de la vitesse de rotation de l'arbre menant. Le combinaison de la seconde masse d'inertie et du mécanisme de liaisons articulées constitue donc un amortisseur de vibrations de torsion ou d'irrégularités de rotation associé à la première masse d'inertie et dont l'une des fréquences de résonance d'oscillations en rotation est sensiblement proportionnelle à la vitesse de rotation de l'arbre menant. Ainsi, le dispositif selon l'invention est capable d'atténuer avec une grande efficacité la composante harmonique des vibrations de torsion ou irrégularités de rotation dont la fréquence est sensiblement égale à l'une des fréquences de résonance du dispositif. Cette efficacité dépend notamment de la valeur de l'inertie polaire de la seconde masse d'inertie et des limites autorisées pour la rotation relative de la seconde masse d'inertie par rapport à la première masse d'inertie.
Ainsi, dans le dispositif selon l'invention, la seconde masse d'inertie est autorisée à dévier en rotation par rapport à la première masse d'inertie dans un intervalle pouvant atteindre au moins plus ou moins dix degrés.
Dans le dispositif selon l'invention, la seconde masse d'inertie peut être réalisé avantageusement en tôle d'acier et comprendre une jante sur sa périphérie extérieure. Son inertie polaire est calculée en fonction des caractéristiques du mécanisme de liaisons articulées et du rang de l'harmonique des vibrations de torsion ou des irrégularités de rotation pour lequel le dispositif d'amortissement des vibrations est conçu.
On peut par exemple concevoir un tel dispositif afin de réduire considérablement les irrégularités de rotation du vilebrequin d'un moteur à combustion interne à quatre cylindres fonctionnant selon un cycle à quatre temps. Dans ce cas, le dispositif et son amortisseur de vibrations sont conçus pour que l'une des fréquences de résonance d'oscillations de torsion de l'amortisseur soit sensiblement égale à deux fois la vitesse de rotation de l'arbre menant. Ainsi, le mécanisme de liaisons articulées peut être conçu et réalisé pour être associé à la seconde masse d'inertie dont l'inertie polaire est de l'ordre de plusieurs dizaines de grammes par mètre carré.
Selon une autre caractéristique de l'invention, les bras en forme de levier du mécanisme de liaisons articulées s'étendent transversalement dans un plan perpendiculaire à l'axe de rotation et sont situé à l'intérieur de la jante de la seconde masse d'inertie. Chaque bras en forme de levier comprend une zone à section réduite déformable élastiquement à la manière d'un ressort à lame. Chaque bras en forme de levier est muni le cas échéant de masses complémentaires.
Ainsi, le mécanisme de liaisons articulées et notamment la partie du bras en forme de levier située du coté opposé à l'axe de pivotement et comprenant le cas échéant des masses complémentaires rapportées par exemple par rivetage exerce, sous l'effet des forces centrifuges, un moment de force qui a pour effet de déformer élastiquement la zone à section réduite des bras en forme de levier, ladite zone à section réduite réagissant comme un ressort à lame. Plus la vitesse de rotation est élevée, plus cette zone se déforme, tendant à rapprocher la partie opposée à l'axe de pivotement des bras vers la paroi de la jante intérieure de la seconde masse d'inertie. Lorsque la vitesse de rotation atteint une certaine valeur, par exemple aux alentours de 2500 tours par minutes, les oscillations relatives en rotation de la seconde masse d'inertie par rapport à la première masse d'inertie sont quasi nulles et la partie du bras opposée à l'axe de pivotement ou bien au moins l'une des masses complémentaires fixée sur chaque bras en forme de levier vient en contact avec la jante intérieure de la seconde masse d'inertie. Au delà de cette vitesse de rotation, la partie du bras opposée à l'axe de pivotement ou bien au moins l'une des masses complémentaires fixée sur chaque bras en forme de levier reste en contact avec la paroi intérieure de la jante de la seconde masse d'inertie, cette paroi reprenant l'accroissement des efforts et des contraintes mécaniques générées par effet centrifuge et transmises normalement intégralement dans le mécanisme de liaisons articulées. Ainsi, seuls les efforts et contraintes mécaniques correspondant notamment au moment de force nécessaire à la déformation élastique de la zone à section réduite du bras lors du contact entre la partie du bras opposée à l'axe de pivotement ou bien au moins l'une des masses complémentaires fixée sur chaque bras en forme de levier et la paroi intérieure de la jante de la seconde masse d'inertie sont transmis au mécanisme de liaisons articulés. Au delà de la vitesse de rotation pour laquelle ledit contact s'établit et au delà de laquelle le dispositif de l'invention n'est plus nécessaire en terme d'absorption des vibrations, ces efforts et contraintes mécaniques n'augmentent pratiquement plus, permettant ainsi au dispositif de fonctionner à des vitesses de rotation élevées sans risque de destruction du mécanisme de liaisons articulées.
Avantageusement, chaque bras en forme de levier peut être complété par une ou plusieurs masses supplémentaires qui sont fixées du coté opposé à l'axe de pivotement du bras. Ces masses peuvent être revêtues d'une épaisseur de caoutchouc ou matériau élastomère localisée sur l'un des bords extérieurs de ladite masse complémentaire, de préférence sur le bord situé en vis à vis avec la jante intérieure de la seconde masse d'inertie. Ainsi, le contact entre la paroi intérieure de la jante extérieure de masse d'inertie et au moins l'une des masses complémentaires fixées sur la partie du bras opposée à l'axe de pivotement s'effectue de façon amortie, sans choc, grâce à l'épaisseur du matériau amortisseur (caoutchouc ou élastomère) qui est le premier à venir en contact avec la paroi intérieure de la jante de la seconde masse d'inertie.
Dans le dispositif selon l'invention, la première masse d'inertie fixée sur l'extrémité d'un arbre menant comme par exemple l'extrémité d'un vilebrequin peut avantageusement être complétée par l'adjonction soit d'une couronne de démarreur, soit d'une cible métallique servant à la mesure de position angulaire instantanées de l'arbre menant au moyens de capteurs à effet Hall, soit des deux.
Lorsque cela est possible, la couronne de démarreur et la première masse d'inertie fixée sur l'extrémité d'un arbre menant sont réalisés d'une seule pièce, par exemple à partir d'une ébauche de fonderie.
Dans le dispositif selon l'invention, la couronne de démarreur peut être fixée soit directement sur la première masse d'inertie qui est fixée sur l'extrémité d'un arbre menant, soit sur une pièce intermédiaire qui est fixée sur la première masse d'inertie.
Avantageusement, la pièce intermédiaire et la cible métallique peuvent être fixées sur la première masse d'inertie au moyen de rivets et de manière à garantir, lors de l'assemblage, une position angulaire relative de la couronne de démarreur par rapport à la première masse d'inertie et/ou de la cible par rapport à la première masse d'inertie.
De préférence, la cible et la pièce intermédiaire recevant la couronne de démarreur peuvent être réalisées en tôle.
Avantageusement, la pièces intermédiaire peut comporter une jante s'étendant radialement autour de l'axe de rotation de l'arbre menant. La périphérie extérieure de ladite jante peut être aménagée de manière à recevoir la couronne de démarreur montée coaxiale avec la première masse d'inertie.
Dans le dispositif selon l'invention, le bras en forme de levier de chaque module du mécanisme de liaisons articulées peut être réalisé soit par découpage fin d'une tôle d'acier, soit en matériau fritté, soit être réalisé à partir d'une pièce massive en acier ou en fonte.
Avantageusement, la ou les masses supplémentaires fixées à l'extrémité de chaque bras peut ou peuvent être réalisées en tôle. Ces masses supplémentaires peuvent être notamment assemblées par rivetage.
Dans le dispositif selon l'invention, la première masse d'inertie fixée sur l'arbre menant peut être complétée par un moyeu comportant une face venant en appui sur l'extrémité de l'arbre menant lors du montage du dispositif sur l'arbre menant, une jante s'étendant radialement autour de l'axe de rotation du dispositif est ajustée autour d'une partie de la première masse d'inertie qui s'étend radialement autour de l'axe de rotation du dispositif, et dont l'extérieur sert de surface de guidage en rotation relative de la seconde masse d'inertie par rapport à la première masse d'inertie. Une extension de la seconde masse d'inertie s'étendant radialement autour de l'axe de rotation du dispositif permet de maintenir axialement la seconde masse d'inertie dans les deux directions au moyen de faces d'appui. L'une de ces faces d'appui est en contact avec le bord s'étendant radialement d'un palier de guidage en rotation et translation de la seconde masse d'inertie par rapport à la première masse d'inertie, l'autre étant en contact glissant avec l'une des surfaces extérieures d'une butée en forme de disque s'étendant radialement autour de l'axe de rotation du dispositif et intercalé entre l'extrémité de l'extension de la seconde masse d'inertie et la première masse d'inertie.
Avantageusement, un élément élastique peut s'intercaler entre la butée de glissement en forme de disque et le premier volant d'inertie de manière à permettre un contact glissant permanent entre les surfaces des paliers de guidages assurant le maintien en déplacement transversal de la seconde masse d'inertie d'une part, d'autre part de contrôler la force de contact au niveau de ces surfaces de glissement sensiblement perpendiculaire à l'axe de rotation du dispositif lors de l'assemblage du moyeu sur la première masse d'inertie d'une part, d'autre part lors de l'installation du dispositif sur l'extrémité de l'arbre menant. Cet élément élastique peut prendre la forme d'un anneau en élastomère ou bien d'un ressort de rappel du type rondelle Belleville.
Dans le dispositif selon l'invention, la transmission du mouvement de la première masse d'inertie à la seconde masse d'inertie est assurée par le mécanisme de liaisons articulées. Ce mécanisme de liaisons articulées est composé d'un ou plusieurs modules. Ainsi, la première masse d'inertie entraîne en rotation un ou plusieurs axes de pivotement sensiblement parallèles à l'axe de rotation du dispositif et fixés sur la première masse d'inertie. Chaque axe de pivotement entraîne en mouvement un bras en forme de levier comprenant dans l'une de ses extrémités un premier logement dans lequel est installé un premier palier de guidage du bras autour de l'axe de pivotement associé. Chaque bras en forme de levier comprend également un second logement dans lequel peut être installé un second palier de forme tubulaire. La surface cylindrique intérieure de ce palier ou du second logement sert de surface de contact avec un axe cylindrique.
Selon une première variante du dispositif, cet axe cylindrique est un rouleau cylindrique en acier dont le diamètre extérieur est inférieur au diamètre intérieur du second palier installé dans le second logement du bras en forme de levier et dont la surface cylindrique extérieure est en contact roulant sur la surface cylindrique intérieure du second palier installé dans le second logement du bras en forme de levier. Avantageusement, ce second palier peut être supprimé de façon à ce que le rouleau cylindrique soit en contact avec la paroi cylindrique intérieure du second logement. Dans ce cas, le diamètre extérieur du rouleau cylindrique est inférieur au diamètre intérieur du second logement. Ledit rouleau cylindrique est également en contact roulant avec les parois cylindriques intérieures de deux flasques en forme de jante et installées en vis à vis dans deux logements réalisés sur chaque articulation en forme de bielle. Avantageusement, ces deux flasques peuvent être supprimés et remplacés par deux flasques en forme de disque et fixés sur chaque articulation en forme de bielle. Chaque articulation en forme de bielle comprend également un logement cylindrique dont l'axe est sensiblement parallèle à l'axe de révolution des deux logements des deux flasques en contact avec le rouleau cylindrique. Ce logement cylindrique sert de guidage en rotation à l'articulation en forme de bielle autour d'un axe fixé sur la seconde masse d'inertie. Ainsi, la transmission du mouvement de la première masse d'inertie à la seconde masse d'inertie est réalisée par l'intermédiaire de l'axe de pivotement du bras en forme de levier, puis du bras au rouleau cylindrique, puis du rouleau cylindrique à l'articulation en forme de bielle, puis de l'articulation en forme de bielle à l'axe de guidage en rotation de l'articulation en forme de bielle et qui est fixé sur la seconde masse d'inertie. Avantageusement, un palier de guidage en rotation de l'articulation en forme de bielle autour de l'axe fixé sur la seconde masse d'inertie peut être installé à l'intérieur du logement cylindrique de l'articulation en forme de bielle de manière à faciliter le glissement en rotation. Ce palier de guidage peut comporter une extension s'étendant radialement autour de l'axe fixé sur la seconde masse d'inertie et s'intercalant entre un épaulement de l'axe fixé sur la seconde masse d'inertie et l'un des bords de l'articulation en forme de bielle. Cet épaulement vient en appui avec une surface adjacente de la seconde masse d'inertie.
Avantageusement, un flasque de guidage en déplacement transversal peut être monté coaxial sur l'une des extrémités opposée à l'épaulement de l'axe qui est fixé sur la seconde masse d'inertie. De cette manière, le déplacement transversal de l'articulation en forme de bielle est limité dans les deux directions.
Selon une variante du dispositif, le rouleau cylindrique peut être remplacé par un axe cylindrique monté fixe sur l'articulation en forme de bielle. Dans ce cas, le diamètre intérieur du palier de guidage installé dans le second logement du bras est sensiblement identique, au jeu près, au diamètre extérieur de cet axe cylindrique.
Dans le dispositif selon l'invention, chacun des axes servant au guidage en rotation des articulations en forme de bielle peut être fixé sur la seconde masse d'inertie par l'intermédiaire d'une extension cylindrique emmanchée à l'intérieur d'un alésage cylindrique réalisé dans la seconde masse d'inertie. La longueur de cet alésage cylindrique peut correspondre à l'épaisseur de la seconde masse d'inertie à l'endroit de l'alésage et complétée par l'épaisseur d'une rondelle sensiblement coaxiale à l'alésage et fixée sur la seconde masse d'inertie par soudure ou par rivetage. Ainsi, grâce à cette surépaisseur, les moments de flexion provoqués par les forces centrifuges peuvent avantageusement être distribués sur une plus grande surface de maintien de l'axe de guidage.
De façon générale, le rang de l'harmonique des vibrations de torsion ou des irrégularités de rotation de l'arbre menant pour lequel le dispositif selon l'invention est conçu dépend notamment de l'inertie polaire de la seconde masse d'inertie, de la répartition des masses du mécanisme de liaisons articulées et de la position radiale des axes d'articulations du mécanisme.

Selon un mode de réalisation général de l'invention, le volant d'inertie atténuateur des vibrations de torsion ou irrégularités de rotation, en particulier pour véhicule automobile de tourisme ou utilitaire, comprend deux masses d'inertie coaxiales dont la première est entraînée en rotation par un arbre menant, comme par exemple le vilebrequin d'un moteur à combustion interne, et dont la seconde est montée à rotation sur la première, un mécanisme de liaisons articulées reliant les deux masses d'inertie et comprenant des moyens d'entrée liés à la première masse d'inertie, des moyens de sortie liés à la seconde masse d'inertie, le mécanisme de liaisons articulées étant constitué de un ou plusieurs modules comprenant chacun un bras en forme de levier et s'étendant dans un plan perpendiculaire à l'axe de rotation et monté pivotant en rotation autour d'un axe respectif porté par la première masse d'inertie, d'une articulation en forme de bielle pouvant pivoter en rotation autour d'un axe respectif, cet axe étant porté par la deuxième masse d'inertie et comprenant un épaulement servant de butée axiale à l'articulation en forme de bielle, d'un rouleau cylindrique ou d'un axe reliant par contact le bras et l'articulation en forme de bielle, d'un flasque fixé à l'aide d'une vis sur l'une des extrémités d'un axe respectif et servant de butée en déplacement axial de l'articulation, la deuxième masse d'inertie comprenant sur sa périphérie extérieure une jante sensiblement cylindrique et s'étendant autour de l'axe de rotation du volant.
Avantageusement :
- le mécanisme de liaisons articulées est situé à l'intérieur de la jante réalisée sur la périphérie extérieure de la deuxième masse d'inertie ;
- le bras en forme de levier comporte des logements cylindriques dans lesquels sont installés un premier palier et un deuxième palier permettant au mécanisme de liaisons articulées de résister aux pressions de contact avec les rouleaux cylindriques ou avec les axes et permettant aux bras en forme de levier du mécanisme de liaisons articulées de pivoter facilement en rotation autour de son axe respectif ;

- l'articulation en forme de bielle comporte des logements cylindriques dans lesquels sont installés des flasques comprenant chacun une jante cylindrique et permettant au mécanisme de liaisons articulées de résister aux pressions de contact avec les rouleaux cylindriques qui roulent sur les parois cylindriques intérieures des flasques ;
- un palier comprenant une partie cylindrique et une extrémité s'étendant radialement autour d'un axe respectif est installé en partie à l'intérieur d'un logement cylindrique réalisé dans chaque l'articulation en forme de bielle, permettant à chaque articulation en forme de bielle de pivoter facilement en rotation autour d'un axe respectif ;
- une ou plusieurs masses complémentaires sont fixées sur les bras du mécanisme de liaisons articulées ;
- le mécanisme de liaisons articulées s'oppose, sous l'effet centrifuge, à la rotation relative des masses d'inerties en exerçant un couple de rappel sur la deuxième masse d'inertie, ce couple étant sensiblement proportionnel à la rotation relative des deux masses d'inertie et au carré de la vitesse de rotation de la première masse d'inertie ;
- l'amortisseur de vibrations de torsion ou irrégularités de rotation défini par le mécanisme de liaisons articulées et la deuxième masse d'inertie sur laquelle sont fixés les axes complétés des flasques et des vis, un palier de guidage en rotation et translation et des extensions soudées en forme de rondelle, a au moins une fréquence de résonance en oscillations de rotation sensiblement proportionnelle à la vitesse de rotation de la première masse d'inertie ;
- un moyeu comprenant une jante sur laquelle est réalisée une surface cylindrique extérieure est intercalé entre une jante de la deuxième masse d'inertie et la partie sensiblement cylindrique de la première masse d'inertie de manière à fournir une surface de guidage en rotation relative de la deuxième masse d'inertie par rapport à la première masse d'inertie et de manière à fournir une butée axiale permettant de limiter le déplacement axial de la deuxième masse d'inertie par rapport à la première masse d'inertie ;
- la deuxième masse d'inertie est réalisée en tôle ;
- la deuxième masse d'inertie comporte une extrémité en continuité de la jante, cette extrémité étant délimitée axialement par deux faces sensiblement perpendiculaires à l'axe de rotation du volant ;
- la première masse d'inertie comprend le plateau de réaction d'un embrayage ;
- le mécanisme de liaisons articulées comprend quatre modules montés deux à deux symétriquement entre les masses d'inertie et disposés autour de l'axe de rotation du volant ;
- une butée de glissement et un élément élastiquement déformable sont intercalés axialement entre l'extrémité de la deuxième masse d'inertie et un bord de la première masse d'inertie de façon à bloquer sans jeu le déplacement axial de la deuxième masse d'inertie dans les deux sens par rapport à la première masse d'inertie ;
- les masses complémentaires sont en tôle ;
- chaque masse complémentaire est complétée d'une épaisseur d'un matériau en caoutchouc ou en élastomère localisée sur l'un des bords d'au moins l'une des masses complémentaires ;
- le matériau en caoutchouc ou en élastomère est situé en vis à vis de la surface cylindrique intérieure de la jante de la deuxième masse d'inertie ;
- chaque bras en forme de levier comporte une zone à section réduite élastiquement déformable à la manière d'un ressort à lame, cette zone étant comprise entre les rayons de raccordement 37 et 38 et permettant au matériau en caoutchouc ou en élastomère, au delà d'une certaine vitesse de rotation et sous l'effet des forces centrifuges, de venir en contact avec la paroi cylindrique intérieure de la jante de la deuxième masse d'inertie ;
- la deuxième masse d'inertie comporte des trous permettant le montage du mécanisme de liaisons articulées, l'aération et l'évacuation des poussières ;
- les contraintes mécaniques transmises sous l'effet centrifuge aux organes de liaisons du mécanisme de liaisons articulées n'augmentent pratiquement plus au delà d'une vitesse de rotation dépendante notamment des caractéristiques dimensionnelles de la deuxième masse d'inertie et du mécanisme de liaison articulées ;
- un support comportant une jante en tôle sensiblement cylindrique s'étendant autour de la jante de la deuxième masse d'inertie est fixée sur la première masse d'inertie.

L'invention, ses caractéristiques et avantages seront mieux compris à la lecture de la description qui suit, illustrant à titre d'exemple les dessins annexés dans lesquels :
- la figure 1 est une vue schématique de face coté arbre menant et en coupe partielle d'un volant atténuateur des vibrations selon l'invention ;
- la figure 2 est une vue en coupe selon la ligne A-A de la figure 1 ;
- la figure 3 est une vue en coupe selon la ligne B-B de la figure 1 ;
- la figure 4 est une vue schématique de face à plus grande échelle d'un bras en forme de levier et de ses masses complémentaires du mécanisme de liaisons articulées du dispositif de la figure 1 ;
- la figure 5 est une vue schématique de dessus d'un bras en forme de levier et de ses masses complémentaires du mécanisme de liaisons articulées du dispositif de la figure 1 ;
- la figure 6 est une vue schématique de face coté arbre mené d'un volant atténuateur des vibrations selon l'invention;
- la figure 7 est une vue en coupe partielle selon la ligne A-A d'une variante de réalisation ;
- la figure 8 est une vue en coupe partielle selon la ligne A-A d'une autre variante de réalisation ;
- la figure 9 est une vue de face coté arbre menant et en coupe d'un volant atténuateur des vibrations selon un deuxième mode de réalisation de l'invention ;
- la figure 10 est une vue en coupe selon la ligne X-X de la figure 9 ;
- la figure 11 est une vue en coupe selon la ligne XI-XI de la figure 9.

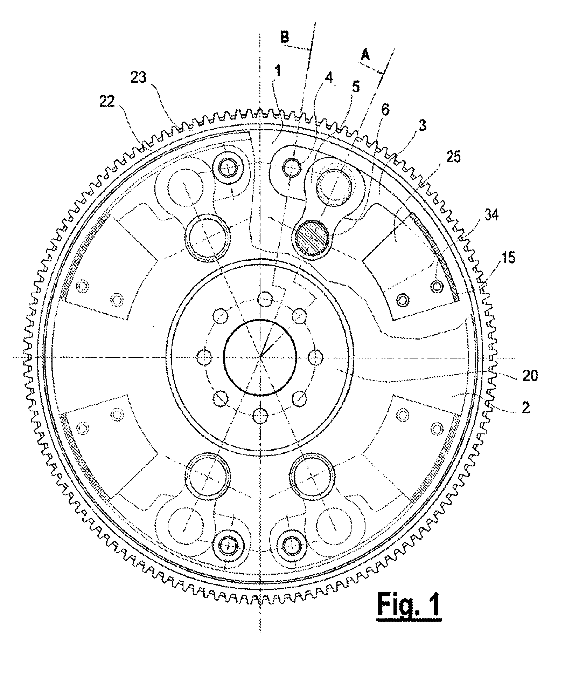

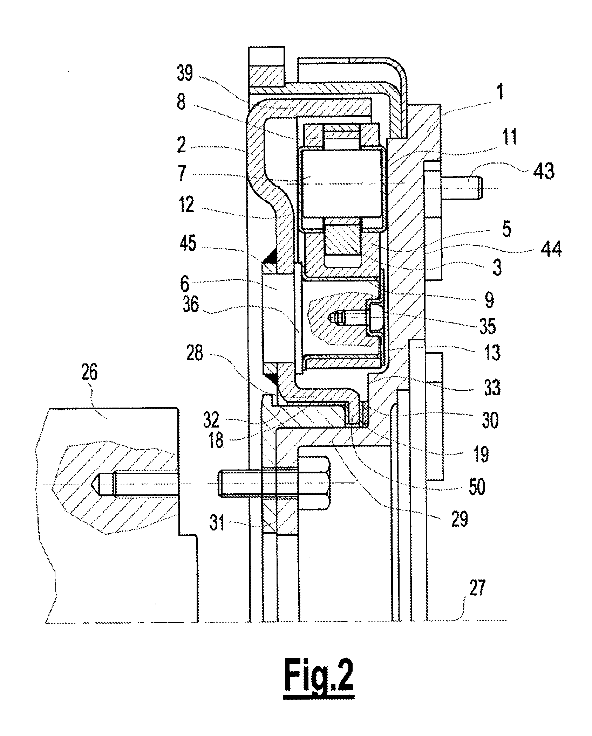

On se réfère d'abord aux figures 1 et 2 qui représentent de façon schématique un volant atténuateur des vibrations selon l'invention, comprenant une première masse d'inertie 1 destinée à être fixée sur un arbre menant 26, comme par exemple l'extrémité d'un vilebrequin d'un moteur à combustion interne. Cette masse d'inertie 1 porte sur sa périphérie externe une cible 21 et une jante 22. La jante 22 porte sur sa périphérie externe une couronne de démarreur 23. Le volant atténuateur des vibrations selon l'invention comprend également une seconde masse d'inertie 2 coaxial à la masse d'inertie 1 et monté à rotation sur celle-ci au moyen d'un palier 18 et d'un moyeu 20. Le palier 18 est fixé à l'intérieur d'une jante 28 aménagée sur la masse d'inertie 2. Le moyeu 20 est fixé par emmanchement serrant autour d'une partie sensiblement cylindrique 29 aménagée sur la masse d'inertie 1 et qui s'étend radialement autour de l'axe de rotation 27 de la masse d'inertie 1.
Le moyeu 20 est également en contact sur la masse d'inertie 1 au niveau d'une surface de contact 31 s'étendant radialement autour de l'axe de rotation 27 et comprise dans un plan sensiblement perpendiculaire à l'axe de rotation 27.
Le palier 18 fixé à l'intérieur de la jante 28 peut glisser à rotation sur la périphérie extérieure cylindrique 32 du moyeu 20.
Le palier 18 comprend une extrémité s'étendant radialement autour de l'axe de rotation 27 et dont l'un des bords vient en appui avec l'extension 50 de la jante 28 de la masse d'inertie 2. L'autre bord de cette extrémité du palier 18 est en contact glissant avec la surface sensiblement perpendiculaire à l'axe de rotation 27 de l'extrémité de la jante du moyeu 20.
L'extension 50 de la jante 28 de la masse d'inertie 2 est également en contact glissant avec une butée de glissement 19 s'étendant radialement autour de l'axe de rotation 27. Cette butée de glissement 19 est également en contact avec un élément élastique 30, lequel est en appui sur une zone de contact 33 de la masse d'inertie 1.
Cet élément élastique peut prendre la forme d'un anneau en élastomère légèrement déformé par compression lors de l'assemblage du moyeu 20 autour de la partie cylindrique 29 de la masse d'inertie 1. Il peut également prendre la forme d'une rondelle élastique du type rondelle Belleville. La déformation de l'élément élastique 30 permet un contact permanent de glissement entre la l'extension 50 de la jante 28 de la masse d'inertie 2 et la surface de glissement de la butée de glissement 19 d'une part, d'autre part entre l'un des bords du moyeu 20 et la surface de glissement du palier 18 s'étendant radialement autour de l'axe de rotation 27.

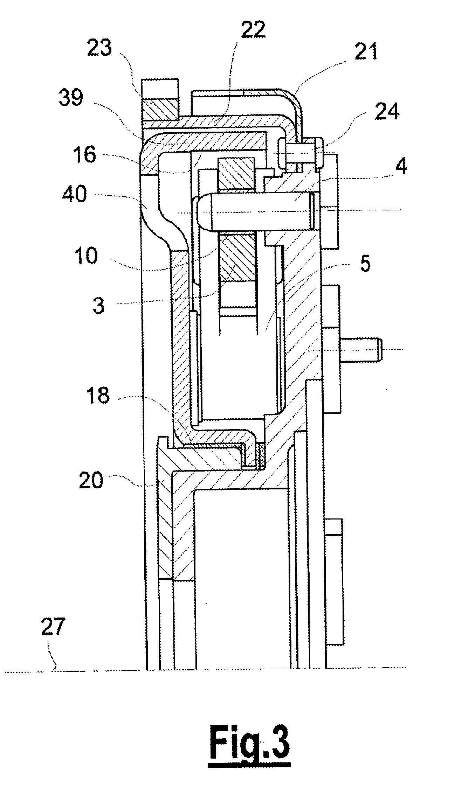

Selon l'invention, la masse d'inertie 2 est positionnée axialement grâce au palier 18, à la butée de glissement 19, à l'élément élastique 30 en appui sur la zone 33 de la masse d'inertie 1, le moyeu 20 dont l'un des bords est en contact glissant avec l'une des surfaces de glissement du palier 18.
Les deux masses d'inertie 1 et 2 sont liées l'une à l'autre par un mécanisme de liaisons articulées dont chacun des modules comprend un bras 3 en forme de levier pouvant pivoter en rotation autour d'un axe 4 fixé sur la masse d'inertie 1, cet axe étant sensiblement parallèle à l'axe de rotation 27 du dispositif selon l'invention, une articulation 5 en forme de bielle reliant le bras 3 en forme de levier et la masse d'inertie 2, un axe 6 fixé sur la masse d'inertie 2 et autour duquel peut pivoter en rotation l'articulation 5 en forme de bielle, un rouleau cylindrique 7 permettant une liaison mécanique entre le bras 3 en forme de levier et l'articulation 5 en forme de bielle et par lequel sont transmises des forces de rappel générées sous l'effet centrifuge.
Comme on le voit en figure 3, chaque axe 4 est monté serrant dans des logements cylindriques aménagés dans la masse d'inertie 1. Chaque axe 4 possède une extrémité de forme arrondie ou rayonnée de manière à facilité l'installation du bras 3 autour de l'axe 4.
Comme on le voit en figures 1 et 3, chaque bras 3 en forme de levier possède un premier logement cylindrique à l'intérieur duquel est fixé un palier 10 de forme tubulaire. Ce palier 10 possède une surface intérieure cylindrique facilitant le glissement avec la surface cylindrique extérieure de l'axe 4 lorsque le bras 3 pivote en rotation autour de l'axe 4.
Comme on le voit en figures 1 et 2, chaque bras 3 possède également un second logement cylindrique à l'intérieur duquel est fixé un palier 8 de forme tubulaire. Les axes de révolution des paliers 8 et 10 sont parallèles entre eux. Le palier 8 est réalisé dans un matériau résistant aux pressions de contact communément appelées pressions de Hertz.
Lorsque le dispositif selon l'invention est entraîné en rotation par l'arbre menant 26, la surface cylindrique extérieure du rouleau cylindrique 7 est, sous l'effet centrifuge, en contact avec la surface intérieure cylindrique du palier 8.
Chaque articulation 5 en forme de bielle possède deux parties latérales identiques en prolongement de la partie située autour de l'axe 6 et dans lesquelles sont aménagées deux logements cylindriques destinés à recevoir des flasques 11 et 12. Ces flasques 11 et 12 sont montés serrant à l'intérieur des logements cylindriques des parties latérales de l'articulation 5 en forme de bielle. Ils possèdent chacun une surface intérieure cylindrique en contact avec la surface cylindrique extérieure du rouleau cylindrique 7.
Les flasques 11 et 12 sont réalisés dans un matériau résistant aux pressions de contact communément appelées pressions de Hertz.
L'articulation 5 en forme de bielle possède en outre un logement cylindrique à l'intérieur duquel est installé un palier 9. Le palier 9 facilite le glissement en rotation de l'articulation 5 en forme de bielle autour de l'axe 6.
Une butée de glissement 13 fixée coaxiale avec l'axe 6 à l'aide d'une vis 35 vient avantageusement compléter chaque module du mécanisme de liaisons articulées.
Le palier 9 comprend une extension en forme d'aile qui s'étend radialement autour de l'axe de révolution de l'axe 6 et qui sert de butée de déplacement axial de l'articulation 5 en forme de bielle. La surface de cette extension du palier 9 en regard de l'articulation 5 en forme de bielle est revêtue d'un matériau facilitant le contact glissant.

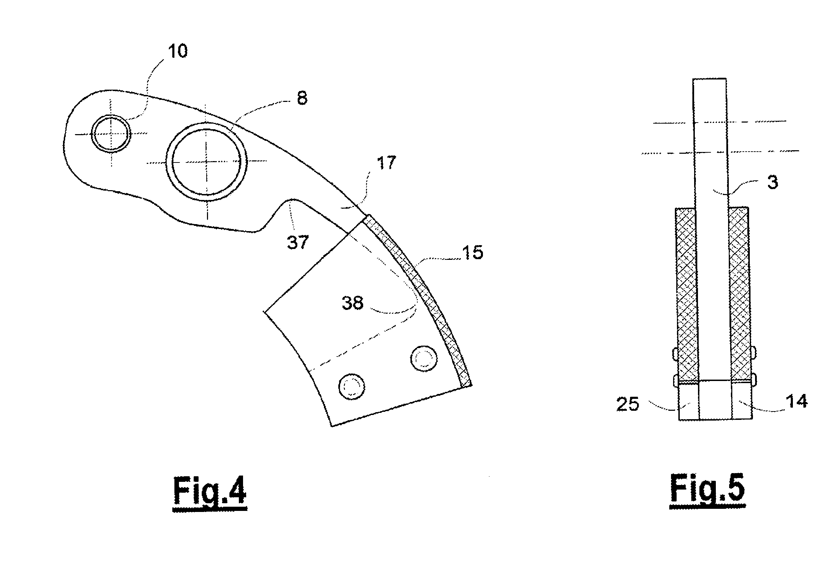

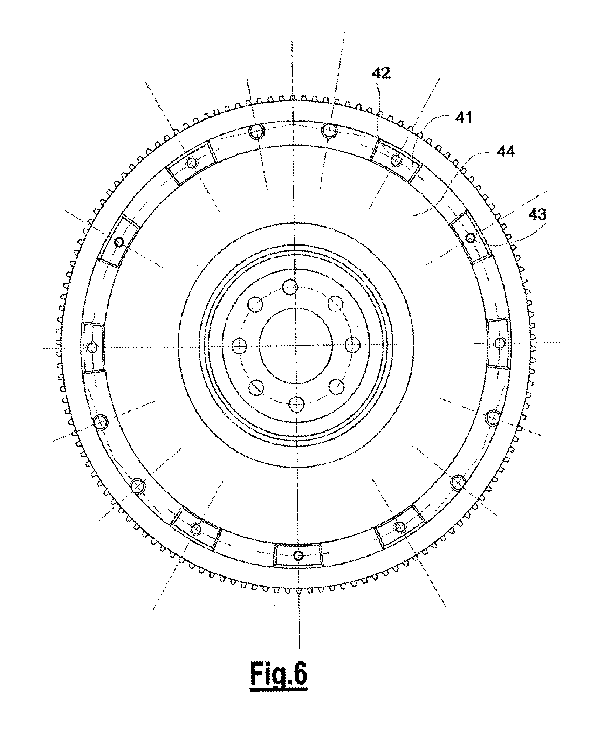

L'axe 6 est emmanché à l'intérieur d'un logement cylindrique aménagé sur la masse d'inertie 2 et dont l'axe de révolution est sensiblement parallèle à l'axe de rotation 27. L'axe 6 possède une partie 36 en forme d'épaulement venant en appui avec l'une des parois de la masse d'inertie 2. Cet épaulement 36 sert de butée en déplacement axial de l'articulation 5 en forme de bielle. Avantageusement, la surface de l'extrémité latérale du palier 9 en regard de l'épaulement 36 possède un revêtement favorisant le contact glissant avec l'épaulement 36.
Comme on le voit en figures 4 et 5, chaque bras 3 possède un contour extérieur pouvant être réalisé par découpage fin d'une plaque d'acier. Chaque bras 3 possède une zone 17 de section plus réduite s'étendant entre deux rayons de raccordement 37 et 38. Cette zone 17 peut de déformer élastiquement à la manière d'un ressort à lame.
Chaque bras 3 peut être complété par une ou deux masses complémentaires 14 et 25 réalisées par découpage de tôle d'acier. Ces masses complémentaires peuvent avantageusement être fixées sur l'une des extrémités des bras 3 par rivetage.
Au moins l'une des masses complémentaires 14 ou 25 est revêtue sur l'un de ses bords extérieurs d'une épaisseur d'un matériau élastomère qui peut par exemple être lié à la masse complémentaire par procédé d'adhérisation. De préférence, ce matériau élastomère est lié sur le bord de la masse complémentaire en regard de la paroi cylindrique intérieure 16 de la jante 39 de la masse d'inertie 2. Cette jante 39 s'étend radialement autour de l'axe de rotation 27.
Chaque module du mécanisme de liaisons articulées est constitué de la façon suivante. Chaque articulation 5 en forme de bielle reçoit le palier 9 et le flasque 12 monté serrant dans le logement cylindrique de l'une des parties latérales le l'articulation 5. Le bras 3 en forme de levier muni des paliers 8 et 10 est pré-positionné entre les parties latérales de l'articulation 5 en forme de bielle. Lé rouleau cylindrique 7 est introduit à l'intérieur du palier 8. Le flasque 11 est ensuite monté serrant dans le logement cylindrique de l'autre partie latérale de l'articulation 5 en forme de bielle de manière à emprisonner le rouleau cylindrique 7. L'ensemble ainsi constitué est assemblé autour de l'axe 6 puis maintenu sur l'axe 6 grâce à l'assemblage de la butée de glissement 13 par l'intermédiaire de la vis 35.
Avantageusement, des trous de passage 40 sont réalisés sur la masse d'inertie 2 et sont positionnés de manière à pouvoir venir en regard des axes de pivotement 4. Ces trous de passage 40 permettent d'orienter et d'aligner les modules du mécanisme de liaisons articulées, et notamment chaque palier 10 par rapport aux axes de pivotement 4 lors de l'assemblage final du dispositif selon l'invention.
De préférence, quatre modules constitutifs du mécanisme de liaisons articulées sont assemblés symétriquement et deux à deux autour de l'axe de rotation 27, entre les masses d'inertie 1 et 2 et à l'intérieur de la jante 39 de la masse d'inertie 2.
Comme on le voit en figure 6, des protubérances 41 peuvent être réalisées sur la masse d'inertie 1 de manière à pouvoir assembler et positionner axialement un mécanisme d'embrayage (non représenté). La masse d'inertie 1 peut avantageusement être réalisée en fonte. Ainsi, des trous taraudés 42 peuvent être réalisés dans les protubérances 41. On peut également réaliser dans les protubérances 41 des logements cylindriques destinés à recevoir des goupilles 43 servant à orienter angulairement le mécanisme d'embrayage (non représenté) par rapport à la masse d'inertie 1. La surface du plateau de réaction 44 d'un mécanisme d'embrayage (non représenté) peut être réalisée par usinage sur la masse d'inertie 1.

Le dispositif selon l'invention fonctionne de la façon suivante :
Le dispositif selon l'invention et notamment la masse d'inertie 1 sont entraînés en rotation par l'arbre menant 26, comme par exemple le vilebrequin d'un moteur à combustion interne. Les vibrations de torsion ou irrégularités de rotation qui sont produites par le moteur à combustion interne sont transmises par l'arbre menant à la masse d'inertie 1 et génèrent des rotations relatives entre les masses d'inertie 1 et 2. Ces rotations relatives dans l'une ou l'autre des directions par rapport à une position d'équilibre représentée en figure 1 entraînent une rotation relative des axes 6 par rapport à la masse d'inertie 1. Etant donné que les deux masses d'inertie sont liées à rotation par l'intermédiaire du mécanisme de liaisons articulées, étant donnés les effets centrifuges maintenant en tension le mécanisme de liaisons articulées, étant donné que les articulations 5 en forme de bielle ont des dimensions fixes et rigides, lesdites articulations 5 en forme de bielle sont emmenées par les axes 6 en rotation relative par rapport à la masse d'inertie 1 d'une part, d'autre part elles font pivoter en rotation autour des axes 4 les bras 3 en forme de levier par l'intermédiaire des rouleaux cylindriques 7 qui roulent à l'intérieur des paliers 8 et des flasques 11 et 12. Ce mouvement de pivotement en rotation tend à rapprocher les bras 3 en forme de levier vers l'axe de rotation. Dans le même temps, les articulations 5 en forme de bielle tournent autour des axes 6 d'un angle de rotation dépendant de l'angle de rotation relative de la masse d'inertie 1 par rapport à la masse d'inertie 2 d'une part, d'autre part dépendant des dimensions géométriques du mécanisme de liaisons articulées.
Lorsque le dispositif selon l'invention est en rotation, les bras 3 complétés des masses complémentaires 14 et 25, les articulations 5 en forme de bielle, les rouleaux cylindriques 7, les paliers 8 et les flasques 11, 12 sont soumis à l'effet centrifuge. Les moments de forces issus de l'effet centrifuge maintiennent en tension le mécanisme de liaisons articulées. Ces moments de forces génèrent une force résultante de tension appliquée à l'articulation 5 en forme de bielle. Cette force résultante peut se décomposer en une force orientée sensiblement radialement vers l'extérieur et dont la direction est définie par l'intersection du plan de symétrie le l'articulation 5 en forme de bielle et d'un plan sensiblement perpendiculaire à l'axe de rotation 27. Le plan de symétrie de l'articulation 5 en forme de bielle contient notamment l'axe de révolution du logement cylindrique dans lequel est fixé le palier 18. L'autre composante de force est orientée perpendiculairement à la première composante et n'a pour effet que de solliciter les paliers de guidage du mécanisme de liaisons articulées.
Plus grande est la distance séparant les axes de révolution des paliers 8 et 10 logés dans les bras 3, plus faible est la force résultante de tension appliquée à chaque articulation 5 en forme de bielle.
Des rondelles métalliques 45 peuvent être fixées par exemple par soudure sur la masse d'inertie 2 de manière à augmenter la surface d'emmanchement des axes 6. Après soudure des rondelles 45, les logements cylindriques, dans lesquels sont emmanchés les axes 6, sont obtenus avec une grande précision géométrique par usinage.
Chaque articulation 5 en forme de bielle coopérant avec la masse d'inertie 2 par l'intermédiaire des axes 6 et des paliers 9, il en résulte un couple ayant pour effet de ramener la masse d'inertie 2 vers sa position d'équilibre par rapport à la masse d'inertie 1. A la position d'équilibre, ce couple est sensiblement nul bien que la force résultante de tension appliquée à chaque articulation 5 en forme de bielle ne soit pas nulle. En effet, la direction de ladite force résultante de tension est orientée radialement vers l'extérieur et sa direction est définie par l'intersection d'un plan contenant l'axe de rotation et l'axe de révolution de l'axe 6 associé à l'articulation 5 en forme de bielle sur laquelle s'applique la force résultante de tension et d'un plan sensiblement perpendiculaire à l'axe de rotation.
Le dispositif selon l'invention et notamment le mécanisme de liaisons articulées sont dimensionnés de façon à ce que le couple ayant pour effet de ramener la masse d'inertie 2 vers sa position d'équilibre par rapport à la masse d'inertie 1 soit sensiblement proportionnel à l'amplitude de la rotation relative des masses d'inertie 1 et 2 par rapport à la position d'équilibre et soit dans le même temps sensiblement proportionnel au carré de la vitesse de rotation du dispositif.
La masse d'inertie 2 complétée des axes 6, des rondelles 45, du palier 18, des butées 13 et des vis 35 et associée au mécanisme de liaisons articulées générant un couple de rappel sur la masse d'inertie 2 se comporte par conséquent comme un amortisseur de vibrations de torsion ou d'irrégularités de rotation dont l'une des fréquences de résonance en oscillations de rotation peut, en fonction des dimensions et de la position du mécanisme de liaisons articulées, être sensiblement proportionnelle à la vitesse de rotation du dispositif.
Dans l'exemple représenté, la masse d'inertie 2 possède une inertie polaire de plusieurs dizaines de grammes par mètre carré et le mécanisme de liaisons articulées est dimensionné et positionné de manière à ce que l'une des fréquences de résonance en oscillations de rotation de l'amortisseur ainsi réalisé soit sensiblement proportionnel à deux fois le régime de rotation exprimé en Hertz, dans le cas où l'harmonique prépondérant des vibrations relatives aux irrégularités de rotation d'un moteur à combustion interne à quatre cylindres et quatre temps est de rang deux, en particulier dans une plage de fonctionnement du moteur à combustion interne comprise entre le ralenti et une valeur supérieure de l'ordre de 2500 tours par minute.
Ainsi, les couples harmoniques de rang deux, responsables des irrégularités de rotation du vilebrequin, seront en grande partie absorbés par l'amortisseur de vibrations du dispositif selon l'invention. Le dispositif permet par conséquent de réduire considérablement les irrégularités de rotation transmises à l'arbre entraîné à rotation par le dispositif, comme par exemple l'arbre d'entrée d'une boite de vitesses.
En modifiant soit l'inertie polaire de la masse d'inertie 2, soit le mécanisme de liaisons articulées, soit l'un et l'autre, on peut réaliser un dispositif dont l'amortisseur de vibrations ou d'irrégularités de rotation est destiné à absorber de façon efficace les couples harmoniques générés par le moteur à combustion interne et dont l'harmonique prépondérant est de rang différent de la valeur deux. Par exemple, le dispositif selon l'invention peut, moyennant l'adaptation de l'inertie polaire de la masse d'inertie 2, absorber les couples harmoniques de rang trois dans le cas d'un moteur à six cylindres et quatre temps.
L'un des avantages du dispositif selon l'invention est le grand degré de liberté en rotation relative entre les masses d'inertie 1 et 2.

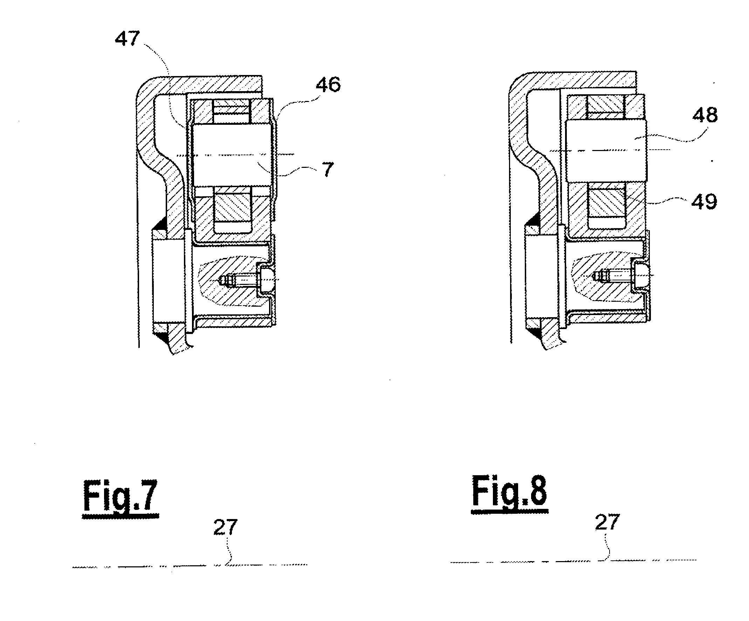

Dans l'exemple représenté, la rotation relative entre les masses d'inertie 1 et 2 peut atteindre au moins dix degrés dans les deux sens. Ainsi, l'amortisseur de vibrations du dispositif selon l'invention est capable d'absorber une grande quantité d'énergie provenant des couples harmoniques générés par le moteur à combustion interne. Ainsi, les irrégularités de rotation d'un moteur à combustion interne peuvent être atténuées de façon efficace, même à un régime de fonctionnement proche de ralenti. En fonction de l'efficacité du dispositif, il est possible d'envisager une réduction de la vitesse de ralenti du moteur à combustion interne tout en limitant les irrégularités de rotation de celui-ci.
L'un des avantages du dispositif selon l'invention est l'augmentation de la capacité d'absorption de l'amortisseur de vibration avec l'augmentation de la vitesse de rotation. Ainsi, lorsque la vitesse de rotation est plus élevée que la vitesse de ralenti du moteur, par exemple de l'ordre de 1500 tours par minutes, l'amortisseur de torsion du dispositif est d'une très grande efficacité avec de faibles amplitudes d'oscillations en rotation relative des masses d'inertie 1 et 2.
Comme on le voit en figures 1 et 2, le mécanisme de liaisons articulées est disposé de façon à ce que les bras 3 en forme de levier et les masses complémentaires 14 et 25 soient situées à l'intérieur de la jante 39 de la masse d'inertie 2. Lorsque le dispositif fonctionne à une vitesse de rotation faible comme par exemple à la vitesse de ralenti du moteur à combustion interne, il existe un jeu séparant la surface des éléments en élastomère 15 en regard de la surface cylindrique intérieure 16 de la jante 39. Au fur et à mesure que la vitesse de rotation augmente, la zone 17 en forme de ressort à lame se déforme de plus en plus sous l'effet des forces centrifuges générées par les masses complémentaires 14 et 25 en rotation autour de l'axe 27 et par la masse de la partie du bras 3 raccordée à la zone 17 et permettant de fixer les masses complémentaires 14 et 25.
Lorsque la vitesse de rotation atteint une certaine valeur dite vitesse de blocage, par exemple de l'ordre de 2500 tours par minutes, au delà de laquelle l'amortisseur de vibration n'est plus utile, la rotation relative de la masse d'inertie 2 par rapport à la masse d'inertie 1 est limitée à des valeurs pratiquement nulles et les zones 17 en forme de ressort à lame sont suffisamment déformées élastiquement pour que les éléments en élastomère 15 rentrent en contact avec la jante 39 de la masse d'inertie 2. L'amortisseur de vibration est alors pratiquement bloqué et les contraintes mécaniques générées par l'effet centrifuges et réparties dans le mécanismes de liaisons articulées atteignent des valeurs dites limites et raisonnables en terme de résistance mécanique du dispositif. Lorsque la vitesse de rotation continue d'augmenter, les contraintes mécaniques réparties dans le mécanismes de liaisons articulées n'augmentent pratiquement plus car l'accroissement des forces centrifuges provoqué par l'accroissement de la vitesse de rotation est repris au niveau du contact entre les éléments en élastomère 15 et la paroi intérieure de la jante 39. Ainsi, il est permis de faire fonctionner le dispositif à des vitesses de rotation élevées dans risque de destruction du dispositif et notamment du mécanisme de liaisons articulées. Ainsi, lorsque la vitesse de rotation est supérieure à la vitesse dite de blocage, le dispositif se comporte alors pratiquement comme un simple volant d'inertie.
Avantageusement, les éléments en élastomère 15 permettent un contact sans choc, de façon amortie limitant ainsi les phénomènes de bruit.
Lorsque la vitesse de rotation diminue à des valeurs inférieures à ladite vitesse de blocage, le contact entre les éléments en élastomère 15 disparaît, libérant ainsi le mécanisme de liaisons articulées et permettant de nouveau à l'amortisseur de vibrations de fonctionner avec efficacité.
Dans la variante de réalisation présentée en figure 7, les flasques 11 et 12 sont supprimés. Les rouleaux cylindriques roulent en contact direct avec l'articulation 5 en forme de bielle. Dans ce cas, les surfaces cylindriques aménagées dans l'articulation 5 en forme de bielle et sur lesquelles les rouleaux cylindriques 7 roulent sont suffisamment résistantes aux pressions de contact dites pressions de Hertz générées par les forces résultantes de tension provoquées par la centrifugation des éléments constitutifs du mécanisme de liaisons articulées. Les rouleaux cylindriques 7 sont maintenus à l'intérieur des articulations 5 par l'intermédiaire des couvercles 46 et 47.
Dans la variante de réalisation présentée en figure 8, les rouleaux cylindriques 7 sont remplacés par des axes 48 montés sur les articulations 5 en forme de bielle. Chaque axe 48 est fixe par rapport à l'articulation 5 associée et leur axe de révolution est parallèle à l'axe de révolution du logement cylindrique réalisé dans l'articulation 5 et dans lequel est monté le palier 9. Le palier 8 est remplacé par un palier 49 emmanché dans un logement cylindrique réalisé dans chaque bras 3. Ainsi, chaque bras 3 peut pivoter en rotation autour de l'axe 48.

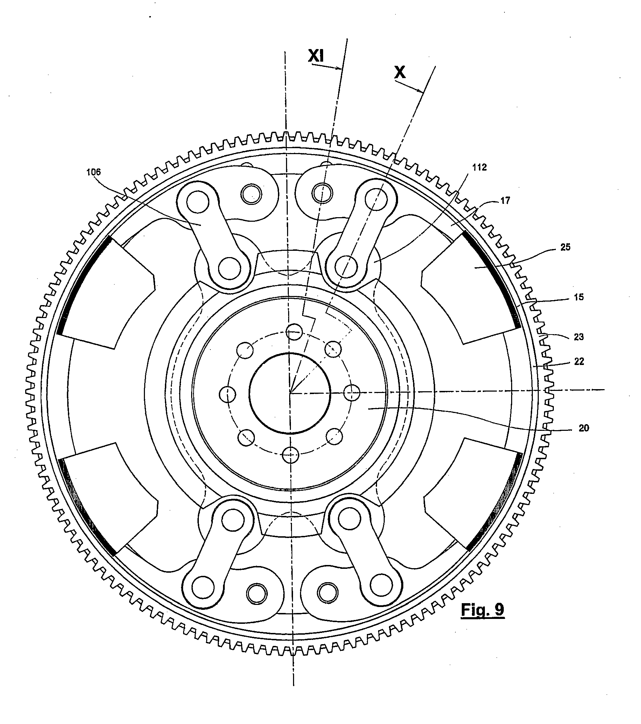

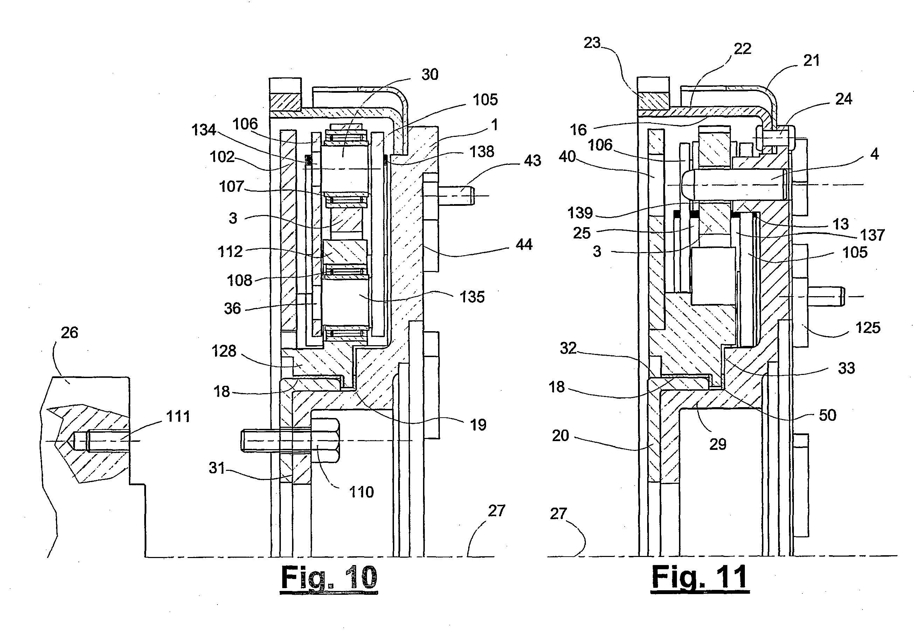

Nous allons, maintenant décrire, en référence aux figures 9 à 11, un deuxième mode de réalisation de l'invention. Les éléments de ce mode de réalisation similaires à ceux du mode de réalisation précédemment décrit sont repérés avec la même référence numérique.
Ainsi, conformément aux figures 9 à 11, une première masse d'inertie 1 est fixée rigidement à l'extrémité d'un vilebrequin 26 au moyen de vis 110 et de trous taraudés 111 réalisés sur l'extrémité du vilebrequin 26. Un moyeu 20 s'intercale entre la masse d'inertie 1 et l'extrémité du vilebrequin 26. Ce moyeu 20 est installé de façon à coopérer avec la partie 29 de la masse d'inertie 1. Ce moyeu 20 possède une périphérie extérieure en forme de jante cylindrique dont la surface extérieure cylindrique 32 sert de surface de guidage en rotation relative et de glissement à un palier lisse 18 installé à l'intérieur d'un logement cylindrique d'un moyeu d'inertie 128. Le palier lisse 18 possède également un flasque s'étendant radialement vers l'axe de rotation 27. Ce flasque est en contact glissant avec une extension 50 du moyeu d'inertie 128; cette extension 50 s'étendant radialement vers l'axe de rotation 27. Cette extension 50 est également en contact glissant avec une butée de glissement 19 s'étendant radialement autour de l'axe de rotation 27. Cette butée de glissement 19 est en contact avec la surface 33 de la masse d'inertie 1. Une rondelle ressort non représentée peut s'intercaler entre la butée de glissement 19 et la surface 33 de manière à maintenir une pression de contact entre la butée de glissement 19 et l'extension 50 d'une part, d'autre part entre le flasque du palier lisse 18 et l'extrémité de la jante du moyeu 20. Cette pression de contact s'établit lors de l'assemblage du moyeu 20 lorsqu'il coopère par contact au niveau de sa surface 31 avec la partie 29 de la masse d'inertie 1.

La masse d'inertie 1 possède le cas échéant des extensions 125 réparties autour de l'axe de rotation 27 et servant d'embases pour la fixation, grâce à des trous taraudés réalisés sur des extensions 125, d'un couvercle de mécanisme d'embrayage non représenté. Des goupilles logées dans des extensions 125 peuvent servir à positionner angulairement ledit couvercle.

La masse d'inertie 1 peut être avantageusement complétée par une jante en tôle 22 et une cible en tôle 21; lesquelles sont assemblées sur la masse d'inertie 1 par l'intermédiaire de rivets 24 ou par tout autre moyen d'assemblage. Une couronne de démarreur 23 peut être installée autour de la jante 22.

Le mécanisme de liaisons articulées est, ici, composé de 4 modules répartis autour de l'axe de rotation 27. Chaque module comprend un levier 3 pouvant pivoter en rotation autour d'un axe de pivotement 4 monté sur la masse d'inertie 1 par l'intermédiaire de logements cylindriques, une bielle en 2 parties 105 et 106, un moyeu d'inertie 128 monté à rotation relative par rapport à la masse d'inertie 1, un roulement étanche à aiguilles 107 dont la bague intérieure est montée autour d'une extension cylindrique 30 de la partie 105 de la bielle et dont la bague extérieure est montée à l'intérieur d'un logement cylindrique réalisé dans le levier 3, un roulement étanche à aiguilles 108 dont la bague intérieure est montée autour d'une extension cylindrique 135 de la partie 105 de la bielle et dont la bague extérieure est montée à l'intérieur d'un logement cylindrique réalisé sur le moyeu d'inertie 128. Ainsi, chaque bielle en 2 parties 105 et 106 peut pivoter en rotation autour de l'axe du roulement à aiguilles 108 et autour de l'axe du roulement à aiguilles 107 logé dans le levier 3 respectif. Les parties 105 et 106 sont emboîtées grâce aux extrémités cylindriques 134 et 36 des extensions cylindriques 30 et 135. Ces extrémités 134 et 36 sont ajustées à des logements cylindriques réalisés dans les parties 106. Chaque levier 3 comporte un logement cylindrique dans lequel est logé un palier lisse 139 pour le guidage en rotation du levier 3 autour de son axe respectif de pivotement 4. Chaque levier peut avantageusement être complété sur l'une de ses extrémités par l'assemblage d'une ou deux masselottes 25 et 137. Chaque masselotte est complétée par une bande élastomère 15 ou 138 adhérisée sur au moins l'une de ses tranches et de manière à ce que la bande élastomère soit positionnée de façon adjacente à la surface intérieure sensiblement cylindrique 16 de la jante 22.

Chaque module du mécanisme de liaisons articulées peut donc être conçu de façon simple et robuste, facile à assembler, capable de supporter des efforts et contraintes élevées grâce notamment à l'intégration de roulements à aiguilles étanches permettant au mécanisme de s'articuler.

Le moyeu d'inertie 128 possède un logement cylindrique dans lequel est installé un palier lisse 18 glissant en rotation relative sur la surface cylindrique 32 du moyeu 20. Le moyeu d'inertie 128 peut avantageusement être complété par une masse complémentaire d'inertie 102. Cette masse 102 peut avantageusement être en tôle d'acier et est installée sur le moyeu 128 concentrique par rapport au palier lisse 18 par assemblage à la presse ou par tout autre moyen permettant de solidariser le disque d'inertie 102 et le moyeu d'inertie 128. Ce disque d'inertie 102 a pour but d'augmenter à moindre coût la valeur de l'inertie polaire des masses en rotation relative par rapport à la masse d'inertie 1. Ces masses en rotation relative sont entraînées en rotation par la masse d'inertie 1 grâce au mécanisme de liaisons articulées et aux axes de pivotement 4. Ainsi, la connexion entre la masse d'inertie 1 qui est menante en rotation et les masses en rotation relative; notamment les masses 128 et 102; s'effectue par le biais des axes de pivotement 4, puis par les leviers 3, puis par les bielles en 2 parties 105 et 106 qui connectent de façon articulée chaque levier 3 au moyeu d'inertie 128 via un roulement à aiguilles 108 respectif installé dans un logement cylindrique du moyeu d'inertie 128.

Des trous de passage 40 sont réalisés sur le disque d'inertie 102 et sont positionnés, lors de l'assemblage du volant d'inertie, en face des axes de pivotement 4. Ils permettent d'aider à l'assemblage du volant d'inertie.

Lorsque le volant d'inertie est entraîné en rotation par le vilebrequin, les leviers 3 munis des masselottes 25 et 137 ainsi que les éléments 105 et 106 des bielles et les roulements à aiguilles 107 subissent les effets des forces centrifuges qui tendent à ramener vers une position d'équilibre le mécanisme de liaisons articulées ainsi que le moyeu d'inertie 128 complété par le disque d'inertie 102. Lorsque le vilebrequin génère des vibrations de torsion et/ou irrégularités de rotation, le mécanisme de liaisons articulées et les masses en rotation relative 128 et 102 se comporte comme un absorbeur d'énergie de vibrations torsionnelles. Cet absorbeur d'énergie vibratoire ainsi constitué peut être dimensionné pour que l'une au moins de ses fréquences de résonance en oscillations corresponde sensiblement à l'une des fréquences des excitations vibratoires prépondérantes générées par le vilebrequin du moteur à combustion interne, et ce quelque soit le régime de rotation du vilebrequin.

Les mouvements d'oscillations de cet absorbeur d'énergie vibratoire se décomposent de la façon suivante: lorsque les masses 128 et 102 oscillent en rotation relative par rapport à la masse d'inertie 1, chaque bielle en 2 parties 105 et 106 a un mouvement combiné de rotation relative par rapport à la masse d'inertie 1 et de pivotement en rotation autour de l'axe du roulement à aiguilles 108 respectif, chaque levier 3 complété par les masselottes 25 et 137 pivote en rotation autour de l'axe de pivotement 4. Tous ces mouvements sont interdépendants.

Ainsi, les modules constituant le mécanisme de liaisons articulées sont dimensionnés de manière à transmettre, sous l'effet des forces centrifuges, un couple de rappel sur les masses d'inertie 128 et 102 lorsque celles ci dévient de leur position d'équilibre. Ce couple de rappel est quasiment nul lorsque les masses d'inertie 128 et 102 n'ont pas dévié de leur position dite d'équilibre par rapport à la masse d'inertie 1. Dans le cas contraire, ce couple de rappel est, selon le mode de réalisation et les dimensions du mécanisme de liaisons articulées, sensiblement proportionnel à l'amplitude de déviation angulaire des masses d'inertie 128 et 102 et sensiblement proportionnel au carré de la vitesse de rotation de l'arbre menant. Le combinaison des masses d'inertie 128 et 102 et du mécanisme de liaisons articulées constitue donc un amortisseur de vibrations de torsion et d'irrégularités de rotation associé à la masse d'inertie 1 et dont la fréquence de résonance d'oscillations en rotation peut être sensiblement proportionnelle à la vitesse de rotation de l'arbre menant. Ainsi, le dispositif selon l'invention est capable d'absorber avec une grande efficacité le couple harmonique responsable des irrégularités de rotation. Cette efficacité dépend notamment de la valeur de l'inertie polaire des masses d'inertie 128 et 102 et des limites autorisées pour le déplacement angulaire relatif du moyeu d'inertie 128 par rapport à la masse d'inertie 1. Bien entendu, les bielles en 2 parties 105 et 106 ainsi que les roulements à aiguilles 107 et 108 contribuent par leurs masses et leurs mouvements oscillants à l'atténuation des vibrations du vilebrequin. Dans le dispositif décrit, le moyeu d'inertie 128 est autorisé à dévier en rotation par rapport à la masse d'inertie 1 dans un intervalle pouvant atteindre plus ou moins douze degrés.

De manière à protéger le mécanisme de liaisons articulées vis à vis de contraintes trop importantes sous l'effet des forces centrifuges à vitesse de rotation élevée, chaque bras possède une zone 17 à section réduite qui réagit comme un ressort à lame. Plus la vitesse de rotation est élevée, plus cette zone se déforme élastiquement, tendant à rapprocher les masselottes 25 et 137 et donc les bandes élastomères 15 et 138 la paroi sensiblement cylindrique 16 de la jante 22. Lorsque la vitesse de rotation atteint une certaine valeur, par exemple aux alentours de 2500 tours par minutes, les oscillations relatives en rotation de la masse d'inertie 128 par rapport à la masse d'inertie 1 sont quasi nulles et les bandes élastomères 15 et 138 viennent coopérer par contact avec la jante 22. Au delà de cette vitesse de rotation, cette jante reprend la quasi totalité de l'accroissement des efforts et des contraintes mécaniques générées par effet centrifuge et transmises normalement intégralement au mécanisme de liaisons articulées. Au delà de la vitesse de rotation pour laquelle ledit contact s'établit et au delà de laquelle le dispositif absorbeur vibratoire n'est plus nécessaire, les efforts et contraintes mécaniques appliqués au mécanisme de liaisons articulées n'augmentent pratiquement plus, permettant ainsi au dispositif de fonctionner à des vitesses de rotation élevées sans risque de destruction du mécanisme de liaisons articulées.

Cet absorbeur d'énergie vibratoire peut être dimensionné de manière à absorber avec une grande efficacité l'énergie vibratoire du couple harmonique généré sur le vilebrequin et responsable des phénomènes d'irrégularités en rotation qui sont prépondérant au voisinage du régime de ralenti. Ainsi, dans le cas d'un moteur à combustion interne à 4 cylindres fonctionnant selon un cycle thermodynamique à 4 temps, l'excitation harmonique responsable des irrégularités de rotation, encore appelées acyclisme moteur, est de rang 2, excitation dont la fréquence est double du régime de rotation. L'absorbeur d'énergie vibratoire constitué par le mécanisme de liaisons articulées et par les masses 128 et 102 peut être dimensionné pour que l'une de ses fréquences de résonance en oscillations soit sensiblement égale à 2 fois le régime de rotation du vilebrequin.

Il est à noter que l'épaisseur de matériau 15 peut être un matériau de friction ou tout autre matériau analogue.

## Revendications

1. Volant d'inertie atténuateur de vibrations, de torsion ou d'irrégularités de rotation, notamment pour véhicule automobile, comprenant au moins deux masses d'inertie coaxiales (1, 2 ; 102), l'une entraînée en rotation par un arbre menant et l'autre montée à rotation sur la première, un mécanisme de liaisons articulées reliant les deux masses d'inertie et comportant au moins une masse complémentaire (14, 25) apte à se déplacer sous l'action d'une force centrifuge lors de la rotation du volant d'inertie, le mécanisme comprenant :
- un bras (3) en forme de levier s'étendant sensiblement dans un plan perpendiculaire à l'axe de rotation (27) du volant d'inertie, ce bras étant monté à rotation sur l'une des deux masses d'inertie (1, 2 ; 102) autour d'un premier axe (4) et portant la masse complémentaire (25),
- une bielle (5 ; 105, 106) montée à rotation sur l'autre des deux masses d'inertie autour d'un deuxième axe (6 ; 135), d'une part, et, d'autre part, sur le bras (3) en forme de levier autour d'un troisième axe (7 ; 48 ; 134) situé entre le premier axe (4) et la masse complémentaire (25),
ledit volant d'inertie étant **caractérisé en ce que** le bras (3) comporte une zone (17) située entre les moyens formant masse complémentaire et le troisième axe (7) et apte à se déformer élastiquement sous l'effet de la force centrifuge,
- et **en ce que** le volant d'inertie comporte des moyens (15, 16, 17, 22, 39) de limitation du déplacement de la masse complémentaire (25) lorsque la force centrifuge atteint une valeur seuil prédéterminée correspondant à une vitesse de rotation prédéterminée, ces moyens de limitation comprenant une jante (22,39) sensiblement cylindrique localisée sur une périphérie extérieure de l'une des masses d'inertie.

2. Volant d'inertie selon la revendication 1, **caractérisé en ce que** la jante (22) est localisée sur l'une (1) des masses d'inertie.

3. Volant d'inertie selon la revendication 1, **caractérisé en ce que** la jante (39) est localisée sur l'autre (2) des masses d'inertie.

4. Volant d'inertie selon l'une des revendications 1 à 3, **caractérisé en ce que** les moyens de limitation comprennent une épaisseur de matériau de friction ou en caoutchouc ou en élastomère (15) localisée sur la masse complémentaire.

5. Volant d'inertie selon la revendication 4, **caractérisé en ce que** le matériau (15) est situé en regard d'une surface de contact (16) de la jante (22,39) et est apte à venir en appui dessus lorsque la valeur prédéterminée de la vitesse de rotation est atteinte.

6. Volant d'inertie selon l'une des revendications 1 à 5, **caractérisé en ce que** le deuxième axe (6) comporte un épaulement (36) ainsi qu'un flasque (13) fixé à l'aide d'une vis (3), l'épaulement et le flasque étant aptes à servir de butée axiale à la bielle (5).

7. Volant d'inertie selon l'une des revendications 1 à 6, **caractérisé en ce que** le bras en forme de levier comporte des logements cylindriques dans lesquels sont installés un premier palier (8; 49; 107) et un deuxième palier (10; 139) permettant au mécanisme de liaisons articulées de résister aux pressions de contact avec le troisième axe et permettant au bras en forme de levier de pivoter en rotation autour du premier axe.

8. Volant d'inertie selon l'une des revendication 1 à 6, **caractérisé en ce que** la bielle (5) comporte des flasques (11,12) comprenant chacun une jante sensiblement cylindrique et permettant au mécanisme de liaisons articulées de résister aux pressions de contact du troisième axe (7) qui sont aptes à rouler sur chacune des jantes sensiblement cylindriques des flasques (11,12).

9. Volant d'inertie selon l'une des revendications 1 à 8, **caractérisé en ce que** la bielle comporte un palier (9; 108) permettant le pivotement en rotation de la bielle autour du deuxième axe.

10. Volant d'inertie selon la revendication 9, **caractérisé en ce que** le palier (9) comporte une extrémité s'étendant radialement vers l'extérieur.

11. Volant d'inertie selon l'une des revendications 1 à 10, **caractérisé en ce que** le mécanisme de liaisons articulées est localisé à l'intérieur radialement de la jante (22;39) .

12. Volant d'inertie selon l'une des revendications 1 à 11, **caractérisé en ce que** le mécanisme de liaisons articulées comporte quatre modules montés deux à deux symétriquement par rapport à l'axe de rotation (27) entre les deux masses d'inertie (1,2;102) et disposés autour de l'axe de rotation (27).

13. Volant d'inertie selon l'une des revendications 1 à 12, **caractérisé en ce que** un amortisseur de vibrations de torsion ou d'irrégularités de rotation défini par le mécanisme de liaisons articulée, l'autre (2;102) des masses d'inertie et un palier (18) de guidage en rotation et en translation, est agencé de sorte à avoir une fréquence de résonance en oscillations de rotation sensiblement proportionnelle à la valeur de la vitesse de rotation de l'une (1) des deux masses d'inertie.

14. Volant d'inertie selon l'une des revendications 1 à 13, **caractérisé en ce qu'**un moyeu (20) comprenant une jante sur laquelle est réalisée une surface cylindrique extérieure (32) est intercalé entre une jante (28) de l'autre des masses d'inertie et la partie sensiblement cylindrique (29) de l'une des masses d'inertie de manière à fournir une surface de guidage en rotation relative de l'autre des masses d'inertie par rapport à l'une des masses d'inertie et de manière à fournir une butée axiale permettant de limiter le déplacement axial de l'autre des masses d'inertie par rapport à l'une des masses d'inertie.

15. Volant d'inertie selon l'une des revendications 1 à 14, **caractérisé en ce que** l'autre des masses d'inertie est réalisée en tôle.

16. Volant d'inertie selon la revendication 14 ou 15, **caractérisé en ce que** l'autre des masses d'inertie comporte une extrémité (50) en continuité de la jante (28), cette extrémité (50) étant délimitée axialement par deux faces sensiblement perpendiculaires à l'axe de rotation (27).

17. Volant d'inertie selon l'une des revendications 1 à 16, **caractérisé en ce que** l'une (1) des masses d'inertie comprend un plateau de réaction (44) d'un embrayage.

18. Volant d'inertie selon la revendication 16, **caractérisé en ce qu'**une butée de glissement (19) et un élément élastiquement déformable (30) sont intercalés axialement entre l'extrémité (50) et un bord (33) de l'une (1) des masses d'inertie de façon à bloquer sans jeu le déplacement axial de l'autre des masses d'inertie dans les deux sens par rapport à l'une des masses d'inertie.

19. Volant d'inertie selon l'une des revendications 1 à 18, **caractérisé en ce que** les moyens formant masse complémentaire (14,25) sont en tôle.

20. Volant d'inertie selon l'une des revendications 1 à 19, **caractérisé en ce que** l'autre des masses d'inertie comporte des trous (40) permettant le montage du mécanisme de liaisons articulées, l'aération et l'évacuation des poussières.

21. Volant d'inertie selon l'une des revendications 1 à 20, **caractérisé en ce qu'**un support (22) comportant une jante en tôle sensiblement cylindrique s'étendant autour de la jante (22 ;39) est fixée sur l'une des masses d'inertie.

## Claims

1. Inertia flywheel for attenuation of vibrations, torsion or irregularities of rotation, in particular for a motor vehicle, comprising at least two coaxial inertia masses (1, 2; 102), one of which is rotated by a drive shaft and the other of which is fitted such as to rotate on the first, with a mechanism of articulated connections connecting the two inertia masses, and comprising at least one additional mass (14, 25) which can be displaced under the action of a centrifugal force during the rotation of the inertia flywheel, the mechanism comprising:
- an arm (3) in the form of a lever extending substantially on a plane perpendicular to the axis of rotation (27) of the inertia flywheel, this arm being fitted such as to rotate on one of the two inertia masses (1, 2; 102) around a first shaft (4) and bearing the additional mass (25);
- a connecting rod (5; 105, 106) which is fitted such as to rotate on the other one of the two inertia masses around a second shaft (6; 135) on the one hand, and on the arm (3) in the form of a lever around a third shaft (7; 48; 134) which is situated between the first shaft (4) and the additional mass (25);
the said inertia flywheel being **characterised in that** the arm (3) comprises an area (17) which is situated between the means which form the additional mass and the third shaft (7), and can be resiliently deformed under the effect of the centrifugal force;
- and **in that** the inertia flywheel comprises means (15, 16, 17, 22, 39) for limitation of the displacement of the complementary mass (25) when the centrifugal force reaches a predetermined threshold value corresponding to a predetermined speed of rotation, these means for limitation comprising a substantially cylindrical rim (22, 39) positioned on an outer periphery of one of the inertia masses.

2. Inertia flywheel according to claim 1, **characterised in that** the rim (22) is positioned on one (1) of the inertia masses.

3. Inertia flywheel according to claim 1, **characterised in that** the rim (39) is positioned on the other one (2) of the inertia masses.

4. Inertia flywheel according to any one of claims 1 to 3, **characterised in that** the means for limitation comprise a thickness of friction material or rubber or elastomer (15) which is positioned on the additional mass.

5. Inertia flywheel according to claim 4, **characterised in that** the material (15) is situated opposite a contact surface (16) of the rim (22, 39) and can be supported on it when the predetermined value of the speed of rotation is reached.

6. Inertia flywheel according to one of claims 1 to 5, **characterised in that** the second shaft (6) comprises a shoulder (36) as well as a flange (13) which is secured by means of a screw (3), the shoulder and the flange being able to act as an axial stop for the connecting rod (5).

7. Inertia flywheel according to one of claims 1 to 6, **characterised in that** the arm in the form of a lever comprises cylindrical receptacles in which there are installed a first bearing (8; 49; 107) and a second bearing (10; 139) which allow the mechanism of articulated connections to resist the contact pressures with the third shaft, and allow the arm in the form of a lever to pivot in rotation around the first shaft.

8. Inertia flywheel according to one of claims 1 to 6, **characterised in that** the connecting rod (5) comprises flanges (11, 12) which each comprise a substantially cylindrical rim, and allow the mechanism of articulated connections to resist the contact pressures with the third shaft (7), which pressures can roll on each of the substantially cylindrical rims of the flanges (11, 12).

9. Inertia flywheel according to one of claims 1 to 8, **characterised in that** the connecting rod comprises a bearing (9; 108) which permits the pivoting in rotation of the connecting rod around the second shaft.

10. Inertia flywheel according to claim 9, **characterised in that** the bearing (9) comprises an end which extends radially towards the exterior.

11. Inertia flywheel according to one of claims 1 to 10, **characterised in that** the mechanism of articulated connections is positioned radially in the interior of the rim (22; 39).

12. Inertia flywheel according to one of claims 1 to 11, **characterised in that** the mechanism of articulated connections comprises four modules which are fitted in pairs symmetrically relative to the axis of rotation (27) between the two inertia masses (1,2; 102) and are arranged around the axis of rotation (27).

13. Inertia flywheel according to one of claims 1 to 12, **characterised in that** a damper for vibrations, torsion or irregularities of rotation defined by the mechanism of articulated connections, the other one (2; 102) of the inertia masses and a bearing (18) for guiding in rotation and in translation, is designed such as to have a frequency of resonance in oscillations of rotation which is substantially proportional to the value of the speed of rotation of one (1) of the two inertia masses.

14. Inertia flywheel according to one of claims 1 to 13, **characterised in that** a hub (20) comprising a rim on which an outer cylindrical surface (32) is provided, is interposed between a rim (28) of the other one of the inertia masses and the substantially cylindrical part (29) of one of the inertia masses, such as to provide a surface for guiding in rotation relative to the other one of the inertia masses in relation to one of the inertia masses, and such as to provide an axial stop which makes it possible to limit the axial displacement of the other one of the inertia masses in relation to one of the inertia masses.

15. Inertia flywheel according to one of claims 1 to 14, **characterised in that** the other one of the inertia masses is made of metal plate.

16. Inertia flywheel according to claim 14 or 15, **characterised in that** the other one of the inertia masses comprises an end (50) in continuity with the rim (28), this end (50) being delimited axially by two surfaces which are substantially perpendicular to the axis of rotation (27).

17. Inertia flywheel according to one of claims 1 to 16, **characterised in that** one (1) of the inertia masses comprises a reaction plate (44) of a clutch.

18. Inertia flywheel according to claim 16, **characterised in that** a sliding stop (19) and a resiliently deformable element (30) are interposed axially between the end (50) and an edge (33) of one (1) of the inertia masses, such as to block without play the axial displacement of the other one of the inertia masses, in both directions relative to one of the inertia masses.

19. Inertia flywheel according to one of claims 1 to 18, **characterised in that** the means which form the additional mass (14, 25) are made of metal plate.

20. Inertia flywheel according to one of claims 1 to 19, **characterised in that** the other one of the inertia masses comprises holes (40) which permit the fitting of the mechanism of articulated connections, the ventilation, and the discharge of dust.

21. Inertia flywheel according to one of claims 1 to 20, **characterised in that** a support (20) which comprises a substantially cylindrical metal plate rim and extends around the rim (22; 39) is secured to one of the inertia masses.

## Patentansprüche

1. Schwungrad zur Dämpfung von Torsionsschwingungen oder von Rotations-Unregelmäßigkeiten, insbesondere für ein Kraftfahrzeug, mit zumindest zwei koaxialen Schwungmassen (1, 2; 102), von denen die eine drehend durch eine Antriebswelle angetrieben ist und die andere drehbar an der ersten montiert ist, wobei ein Mechanismus mit gelenkigen Verbindungen die beiden Schwungmassen miteinander verbindet und zumindest eine Komplementärmasse (14, 25) aufweist, die dazu geeignet ist, sich unter der Einwirkung einer Zentrifugalkraft bei der Drehung des Schwungrads zu verlagern, wobei der Mechanismus umfasst:
- einen Arm (3) in der Form eines sich in etwa in einer senkrecht zur Drehachse (27) des Schwungrads erstreckenden Hebels, wobei dieser Hebel an einer der beiden Schwungmassen (1, 2; 102) drehbar um eine erste Achse (4) montiert ist und die Komplementärmasse (25) trägt,
- ein Pleuel (5; 105, 106), das drehbar einerseits an der anderen der beiden Schwungmassen um eine zweite Achse (6; 135) sowie andererseits an dem hebelförmigen Arm (3) um eine dritte Achse (7; 48; 134), die zwischen der ersten Achse (4) und der Komplementärmasse (25) liegt, montiert ist,
wobei das besagte Schwungrad **dadurch gekennzeichnet ist, dass** der Arm (3) einen Bereich (17) aufweist, der zwischen den die Komplementärmasse bildenden Mitteln und der dritten Achse (7) liegt und geeignet ist, sich unter der Einwirkung der Zentrifugalkraft elastisch zu verformen,
und dadurch, dass das Schwungrad Mittel (15, 16, 17, 22, 39) aufweist zur Begrenzung der Verlagerung der Komplementärmasse (25), wenn die Zentrifugalkraft einen vorbestimmten Schwellwert erreicht, der einer vorbestimmten Drehgeschwindigkeit entspricht, wobei diese Begrenzungsmittel einen in etwa zylindrischen Kranz (22, 39) umfassen, der an einer äußeren Peripherie von einer der Schwungmassen angeordnet ist.

2. Schwungrad nach Anspruch 1, **dadurch gekennzeichnet, dass** der Kranz (22) an der einen (1) Schwungmasse angeordnet ist.

3. Schwungrad nach Anspruch 1, **dadurch gekennzeichnet, dass** der Kranz (39) an der anderen (2) Schwungmasse angeordnet ist.

4. Schwungrad nach einem der Ansprüche 1 bis 3, **dadurch gekennzeichnet, dass** die Begrenzungsmittel eine an der Komplementärmasse angeordnete Lage (15) aus Reibungsmaterial oder aus Kautschuk oder aus Elastomer umfassen.

5. Schwungrad nach Anspruch 4, **dadurch gekennzeichnet, dass** das Material (15) einer Kontaktfläche (16) des Kranzes (22, 39) zugewandt angeordnet ist und geeignet ist, darauf in Anlage zu kommen, wenn der vorbestimmte Wert der Drehgeschwindigkeit erreicht wird.

6. Schwungrad nach einem der Ansprüche 1 bis 5, **dadurch gekennzeichnet, dass** die zweite Achse (6) einen Ansatz (36) sowie einen mit Hilfe einer Schraube (35) befestigten Flansch (13) umfasst, wobei der Ansatz und der Flansch geeignet sind, als axialer Anschlag für den Pleuel (5) zu dienen.

7. Schwungrad nach einem der Ansprüche 1 bis 6, **dadurch gekennzeichnet, dass** der hebelförmige Arm zylindrische Sitze aufweist, in denen ein erstes Lager (8; 49; 107) und ein zweites Lager (10; 139) eingesetzt sind, die es dem Mechanismus mit gelenkigen Verbindungen erlauben, den Drücken beim Kontakt mit der dritten Achse standzuhalten und es dem hebelförmigen Arm erlauben, drehbar um die erste Achse zu schwenken.

8. Schwungrad nach einem der Ansprüche 1 bis 6, **dadurch gekennzeichnet, dass** der Pleuel (5) Flansche (11, 12) aufweist, die jeder einen in etwa zylindrischen Kranz umfassen und es dem Mechanismus mit gelenkigen Verbindungen erlauben, den Drücken beim Kontakt mit der dritten Achse (7) standzuhalten, die geeignet sind, in jedem der in etwa zylindrischen Kränze der Flansche zu rollen.

9. Schwungrad nach einem der Ansprüche 1 bis 8, **dadurch gekennzeichnet, dass** der Pleuel ein Lager (9; 108) aufweist, welches das drehbare Schwenken des Pleuels um die zweite Achse erlaubt.

10. Schwungrad nach Anspruch 9, **dadurch gekennzeichnet, dass** das Lager (9) ein Endstück aufweist, das sich radial nach außen erstreckt.

11. Schwungrad nach einem der Ansprüche 1 bis 10, **dadurch gekennzeichnet, dass** der Mechanismus mit gelenkigen Verbindungen radial innerhalb des Kranzes (22, 39) angeordnet ist.

12. Schwungrad nach einem der Ansprüche 1 bis 10, **dadurch gekennzeichnet, dass** der Mechanismus mit gelenkigen Verbindungen vier Module umfasst, die paarweise symmetrisch zur Drehachse (27) zwischen den beiden Schwungmassen (1, 2; 102) montiert und um die Drehachse (27) herum angeordnet sind.

13. Schwungrad nach einem der Ansprüche 1 bis 12, **dadurch gekennzeichnet, dass** ein Dämpfer von Torsionsschwingungen oder von Rotations-Unregelmäßigkeiten, der durch den Mechanismus mit gelenkigen Verbindungen, die andere Schwungmasse (2; 102) und ein Lager (18) zur rotatorischen und translatorischen Führung gebildet ist, angeordnet ist, um bei den Drehschwingungen eine Resonanzfrequenz zu haben, die in etwa proportional zum Wert der Drehgeschwindigkeit der einen (1) der beiden Schwungmassen ist.

14. Schwungrad nach einem der Ansprüche 1 bis 13, **dadurch gekennzeichnet, dass** eine Nabe (20), die einen Kranz umfasst, auf dem eine zylindrische äußere Oberfläche ausgebildet ist, zwischen einen Kranz (28) der anderen Schwungmasse und dem in etwa zylindrischen Teil (29) der einen Schwungmasse zwischengeschaltet ist, um eine Fläche zur relativen rotatorischen Führung der anderen Schwungmasse im Bezug zu der einen Schwungmasse bereitzustellen, und um einen axialen Anschlag bereitzustellen, der es erlaubt, die axiale Verlagerung der anderen Schwungmasse im Bezug zu der einen Schwungmasse zu begrenzen.

15. Schwungrad nach einem der Ansprüche 1 bis 13, **dadurch gekennzeichnet, dass** die andere Schwungmasse aus Blech ausgeführt ist.

16. Schwungrad nach Anspruch 14 oder 15, **dadurch gekennzeichnet, dass** die andere Schwungmasse in Fortsetzung des Kranzes (28) ein Endstück (50) aufweist, wobei dieses Endstück (50) axial durch zwei zur Drehachse (27) in etwa senkrechte Flächen begrenzt ist.

17. Schwungrad nach einem der Ansprüche 1 bis 16, **dadurch gekennzeichnet, dass** die eine (1) Schwungmasse eine Gegendruckplatte (44) einer Kupplung umfasst.

18. Schwungrad nach Anspruch 16, **dadurch gekennzeichnet, dass** ein Gleitanschlag (19) und ein elastisch verformbares Element (30) axial zwischen das Endstück (50) und einen Rand (33) der einen (1) Schwungmasse eingeschoben sind, um ohne Spiel in beiden Richtungen die axiale Verlagerung der anderen Schwungmasse im Bezug zu der einen Schwungmasse zu blockieren.

19. Schwungrad nach einem der Ansprüche 1 bis 18, **dadurch gekennzeichnet, dass** die die Komplementärmasse (14, 25) bildenden Mittel aus Blech bestehen.

20. Schwungrad nach einem der Ansprüche 1 bis 19, **dadurch gekennzeichnet, dass** die andere Schwungmasse Löcher (40) aufweist, welche die Montage des Mechanismus mit gelenkigen Verbindungen, die Belüftung und die Evakuierung von Staub erlauben.

21. Schwungrad nach einem der Ansprüche 1 bis 20, **dadurch gekennzeichnet, dass** ein Träger (22), der einen in etwa zylindrischen Kranz aus Blech aufweist, welcher sich um den Kranz (22, 39) erstreckt, an einer der Schwungmassen befestigt ist.
